(19) Europäisches Patentamt
European Patent Office
Office européen des brevets

(11) Numéro de publication: **0 248 697**
**B1**

(12) **FASCICULE DE BREVET EUROPEEN**

(45) Date de publication du fascicule du brevet: **08.08.90**

(51) Int. Cl.$^5$: **C 10 M 133/08,**
C 07 C 215/00, C 07 C 219/00

(21) Numéro de dépôt: **87401086.1**

(22) Date de dépôt: **14.05.87**

(54) **Lubrifiants et nouveaux composés polyfluorés utilisables comme additifs.**

(30) Priorité: **30.05.86 FR 8607789**

(43) Date de publication de la demande:
**09.12.87 Bulletin 87/50**

(45) Mention de la délivrance du brevet:
**08.08.90 Bulletin 90/32**

(84) Etats contractants désignés:
**BE CH DE FR GB IT LI LU NL SE**

(56) Documents cités:
**FR-A-1 532 284**
**FR-A-1 604 039**
**FR-A-2 031 650**
**FR-A-2 102 753**
**FR-A-2 520 377**

(73) Titulaire: **ATOCHEM**
**4 & 8, Cours Michelet La Défense 10**
**F-92800 Puteaux (FR)**

(72) Inventeur: **Basset, Dominique**
**2, Allée des Myosotis**
**F-78300 Poissy (FR)**
Inventeur: **Durual, Pierre**
**2 Les Essarts 481 Chemin de la Rossignole**
**F-69390 Vernaison (FR)**
Inventeur: **Fayard, Jean-Claude**
**15 bis, rue Montbrilland**
**F-69003 Lyon (FR)**
Inventeur: **Germanaud, Laurent**
**79 Route Neuve**
**F-69540 Irigny (FR)**
Inventeur: **Hermant, Marc**
**10 ter, rue Lamartine**
**F-95240 Cormeilles-en-Parisis (FR)**

(74) Mandataire: **Leboulenger, Jean et al**
**ATOCHEM Département Propriété Industrielle**
**F-92091 Paris la Défense 10 Cédex 42 (FR)**

**EP 0 248 697 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Description

La présente invention concerne le domaine des lubrifiants et, plus particulièrement, l'incorporation de composés organiques fluorés dans les lubrifiants en vue d'améliorer leurs propriétés anti-usure.

L'application de certains dérivés organo-fluorés comme additifs à des compositions lubrifiants est connue; par exemple l'application des sels d'amines aliphatiques et d'acides monocarboxyliques perhalogénés a et été décrite dans le brevet US 3 565 926 de même que l'application des dérivés obtenus par réaction d'une amine aromatique et d'un composé organique fluoré choisi parmi les mono-acides carboxyliques saturés fluorés ou les chlorures de mono-acides carboxyliques fluorés a été divulguee dans le brevet FR 2 026 493. Cependant ces dérivés carboxyliques présentent l'inconvénient de perdre leur efficacité anti-usure en présence d'additifs classiques tels que les additifs dispersants-détergents, soit par suite d'interactions physico-chimiques qui empêchent leur adsorption au niveau des surfaces à lubrifier, soit à cause d'interactions chimiques, en particulier lorsque les additifs dispersants-détergents sont des sels de métaux alcalino-terreux neutres ou surbasés.

L'emploi d'amines au d'amino-alcools à chaîne polyfluorée, évoqué très succinctement dans le brevet FR 1532284 et ses additions FR 93239 et FR 2102753, a fait l'objet du brevet FR 2520377.

Bien que ces amines et amino-alcools, en association avec des additifs dispersants-détergents, permettent d'obtenir des compositions lubrifiantes possédant des propriétés anti-usure et un pouvoir réducteur du frottement remarquables, leur utilisation est souvent limitée en raison de leur volatilité élevée qui entraîne une diminution de leur efficacité au cours du temps.

Il a maintenant été trouvé que cet inconvénient peut être surmonté en utilisant, comme additifs fluorés anti-usure, les composés répondant à la formule générale:

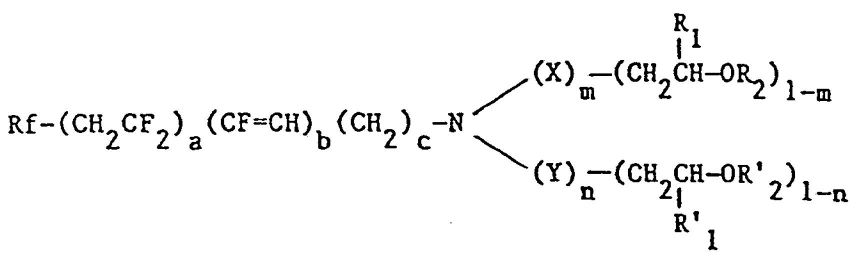

(I)

dans laquelle:

Rf désigne un radical perfluoré, de préférence un radical perfluoroalkyle linéaire ou ramifié contenant de 2 à 20 atomes de carbone et, plus particulièrement, un radical perfluoroalkyle linéaire contenant de 6 à 16 atomes de carbone

a est un nombre entier allant de 0 à 10, de préférence de 0 à 3

b est égal à 0 ou 1, mais ne peut être égal à 1 que si, simultanément, a est égal à 0 et c est égal à 1

c est un nombre entier pouvant aller de 1 à 4 quand a est égal à zéro, mais est égal à 2 quand a est différent de 0

m et n sont chacun égaux à 0 ou 1

X représente un radical aryle éventuellement substitué, de préférence un radical phényle non substitué ou substitué par un groupe alkyle ou alcoxy de 1 à 4 atomes de carbone

Y représente le groupement hydroxy-2 phényle-1 éthyle.

$R_1$ et $R'_1$, identiques ou différentes, représentent chacun un atome d'hydrogène, un radical alkyle contenant 1 à 20 atomes de carbone, un radical cycloalkyle à 5 ou 6 atomes de carbone, ou un radical aryle éventuellement substitué

$R_2$ et $R'_2$, identiques ou différents, représentent chacun un atome d'hydrogène, ou le reste acyle d'un acide carboxylique aliphatique, cycloaliphatique ou aromatique,

l'un au moins des symboles $R_1$ et $R_2$ étant autre que l'hydrogène ou un radical méthyle si la somme a+m+n est nulle, et l'un au moins des symboles $R'_1$ et $R'_2$ est autre que l'hydrogéne si m est égal à 1.

Conformément à la présente invention, on peut utiliser un seul composé de formule (I) ou un mélange de ces composés. Il est notamment particulièrement avantageux du point de vue économique d'utiliser un mélange de composés ayant des radicaux Rf différents.

D'une façon générale, les composés de formule (I) peuvent être préparés suivant des méthodes connues en soi (voir par exemple le brevet FR 1 532 284 et ses additions N° 93 170, 93 239, 95 059, et 2 102 753, ainsi que le brevet FR 2 205 894) à partir des dérivés iodés de formule:

$$Rf—(CH_2CF_2)_a(CH_2)_c—I \qquad (II)$$

par condensation avec une arylamine $X—NH_2$ ou un amino-alcool de formule:

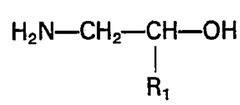

(III)

puis action d'un époxyde sur l'amine fluorée formée de formule:

$$Rf-(CH_2CF_2)_a(CF{=}CH)_b(CH_2)_c-NH-(X)_m-\left[CH_2-\underset{R_1}{\underset{|}{CH}}-OH\right]_{1-m} \qquad (IV)$$

et éventuellement estérification de l'amino-alcool ou diol fluoré ainsi obtenu.

Il convient de signaler que, lorsqu'on met un oeuvre simultanément un iodure du type $Rf—CH_2CH_2I$ et un amino-alcool (III), la condensation conduit généralement à un mélange d'amines fluorées de formules:

$$Rf—CH_2CH_2—NH—CH_2\underset{R_1}{\underset{|}{CH}}—OH \qquad (IV\text{-}a)$$

et

$$R'f—CF{=}CH—CH_2—NH—CH_2\underset{R_1}{\underset{|}{CH}}—OH \qquad (IV\text{-}b)$$

où R'f est un radical perfluoré contenant un atome de carbone de moins que le radical Rf. Il est cependant possible, si on le désire, de séparer ces deux amines par chromatographie gazeuse. On peut également préparer sélectivement l'amine saturée (IV-a) en utilisant un gros excés d'amino-alcool (III). De même, on peut accéder sélectivement à l'amine insaturée (IV-b) en condensant l'aminoalcool (III) sur une oléfine fluorée $Rf—CH{=}CH_2$ conformément au brevet US 3 535 381.

La réaction de condensation du iodure (II) avec l'arylamine $X—NH_2$ ou l'amino-alcool (III) peut être réalisée en l'absence de solvant à une température pouvant aller jusqu'à 160°C, mais elle peut également être effectué au reflux dans un solvant inerte qui est avantageusement choisi parmi les alcools aliphatiques en $C_4$ à $C_6$.

Comme exemples non limitatifs d'époxydes, on peut mentionner plus spécialement l'oxyde d'éthylène, l'oxyde de propylène, l'époxy-1,2 butane, l'époxyk-1,2 hexane, l'époxy-1,2 dodécane, l'époxy-1,2 octadécane et l'oxyde de styrène. La réaction de l'époxyde avec les amines fluorées (IV) intermédiaires peut être réalisée de différentes façon selon la nature de l'époxyde employé. Si l'on met en oeuvre un époxyde normalement gazeux, on opère de préférence par barbotage ou en autoclave, alors qu'avec un époxyde liquide on peut opérer par simple chauffage du mélange de l'amine et de l'époxyde.

L'éventuelle estérification de l'amino-alcool ou-diol fluoré pour obtenir les composés de formule (I) où $R_2$ et/ou $R'_2$ représentent un reste acyle, peut être réalisée entre 0 et 100°C au moyen d'un acide carboxylique ou d'un dérivé de formule:

$$R_3—CO—Z \qquad (V)$$

où Z représente le groupement OH, un atome de chlore ou un groupe alcoxy contenant de 1 à 5 atomes de carbone, et $R_3$ représente un radical aliphatique linéaire ou ramifié, saturé ou non, contenant de 1 à 30 et de préférence 4 à 22 atomes de carbone, un radical cycloaliphatique ou un radical aromatique.

Quand on met en oeuvre un acide (Z=OH), on opère en présence d'un capteur d'eau tel que l'acide sulfurique ou un tamis moléculaire. L'eau formée peut être éliminée par distillation azéotropique à l'aide d'un solvant inerte, de préférence un solvant aromatique tel que, par exemple, le benzène, le toluène ou le xylene.

Si l'on utilise un ester d'acide carboxylique (Z=alcoxy), on opère, en présence d'un catalyseur de transesterification, par exemple l'acide sulfurique, l'acide p-toluènesulfonique ou un alcoolate d'aluminium. On peut employer l'ester $R_3COZ$ en excès comme solvant réactionnel.

Quand l'estérification est effectuée au moyen d'un chlorure d'acide (Z=Cl) on opère en présence d'un capteur d'hydracide, tel que les amines tertiaires contenant 3 à 20 atomes de carbone et choisi de préférence parmi la triméthylamine, la triéthylamine, la tripropylamine, la tributylamine, la tripentylamine et la pyridine. Ce type d'estérification est généralement réalisé au sein d'un solvant constitué par un éther aliphatique (éther éthylique, propylique, isopropylique, butylique, isobutylique ou amylique, méthyl tert-butyl éther, méthyl tert-amyl éther) ou un hydrocarbure aliphatique halogéné comme, par exemple, le chlorure de méthylène et le chloroforme.

Comme exemples de chlorures d'acide utilisables, on peut citer plus particulièrement les chlorures de butyryle, de caproyle, de caprylyle, d'isovaléryle, de lauroyle, de linoléyle, d'heptanoyle, d'oléyle, de palmitoyle, de pélargonyle, de phénylacétyle, de pivaloyle, de stéaroyle, d'undécénoyle, de benzoyle, de méthyl-2 benzoyle, de tert-butyl-4 benzoyle ou de cinnamoyle.

La plupart des dérivés iodés de formule (II) sont des produits connus dont la préparation a été décrite, par exemple, par R. N. Haszeldine (J.C.S. 1949, 2856—2861 et J.C.S. 1953, 3761) et G. V. D. Tiers (J.A.C.S. 1953, *75*, 5978), ainsi que dans le brevet FR 2 211 430 et dans Phosphorus and Sulfur 1984, *20*, 197.

Parmi les composés de formule (I) selon l'invention, on préfère tout particulièrement ceux répondant aux formules suivantes:

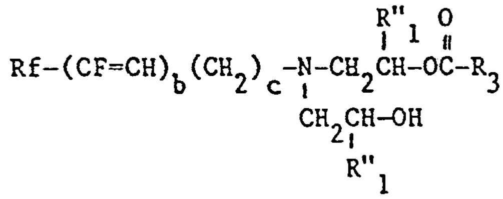

(I-b)

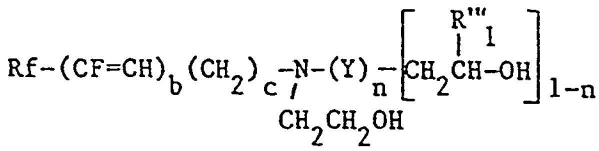

(I-c)

dans lesquelles la somme b+c est égale à 2, $R''_1$ est un atome d'hydrogène ou un radical méthyle et $R'''_1$ représente un radical alkyle contenant un nombre pair de 2 à 16 atomes de carbone.

La quantité d'additif(s) de formule (I) à ajouter à une huile lubrifiante pour obtenir une efficacité optimale est d'au moins 0,01% par rapport au poids de l'huile et est de préférence comprise entre 0,05 et 0,5%. Les additifs selon l'invention sont de préférence constituée de produits industriels dans lesquels la proportion de composés de formule (I) où b=0 est au moins égale à 10% en poids.

L'huile lubrifiante peut être une huile minérale, un hydrocarbure synthétique, une huile synthétique appartenant aux différentes famillies suivantes: glycols, éthers de glycols, esters de glycols, les polyoxyalkylène glycols, leurs éthers et leurs esters, les esters d'acides monocarboxyliques ou polycarboxyliques et de monoalcools ou polyalcools, cette énumération n'étant pas limitative.

Lorsqu'on utilisé comme bases lubrifiantes, les coupes pétrolières destinées à la fabrication des huiles moteurs, telles que les bases "Neutral Solvent", on associe avantageusement aux dérivés fluoro-organiques de l'invention des additifs dispersants-détergents traditionnels tels que les alkylaryl sulfonates et les alkylphénates de calcium ou de baryum, ou des dispersants "sans cendres" comme les dérivés succiniques. Les additifs dispersants-détergents favorisent la solubilisation des additifs fluorés dans l'huile sans porter atteinte aux propriétés anti-usure de ces derniers et sans perdre leur propre pouvoir.

L'addition de dérivés fluorés selon l'invention aux huiles formulées contenant déjà des additifs tels que les alkyldithiophosphates de zinc apporte une amélioration sensible du pouvoir anti-users et une augmentation de la capacité de charge de ces huiles sans perturbation des propriétés apportées par les autres additifs: dispersivité, détergence, pouvoir anti-corrosion, par exemple.

Le remplacement dans les formulations d'huiles pour moteurs à combustion interne de tout ou partie dithiophosphate de zinc utilisé comme additif anti-usure par 0,1 à 0,2% de composés organofluorés selon l'invention permet d'atteindre un niveau de protection contre l'usure égal ou supérieur à celui obtenu avec cet additif traditionnel.

Les additifs fluorés selon l'invention peuvent donc être utilisés soit en remplacement des alkyldithiophosphates de zinc dans les huiles lubrifiantes pour moteurs à essence ou moteurs diesel, soit en suraddition dans ces huiles.

Les exemples et les tests suivants illustrent l'invention sans la limiter. Les pourcentages s'entendent en poids, sauf mention contraire.

## Exemple 1

A température ambiante et sous agitation constante, on ajoute goutte à goutte 5,84 g de chlorure d'heptanoyle à une solution de 21,4 g d'un mélange des aminodiols fluorés $C_8F_{17}CH_2CH_2N(CH_2CH_2OH)_2$ et $C_7F_{15}CF{=}CH{-}CH_2N(CH_2CH_2OH)_2$ (respectivement 65 et 35% en moles) et de 4 g de triéthylamine dans 100 g de diisopropyléther.

Après addition complète du chlorure d'heptanoyle, la solution est chauffée pendant deux heures à 60°C. Après refroidissement, le chlorhydrate de triéthylamine est filtré et lavé à l'éther, puis on élimine le solvant par évaporation sous vide. Le résidu caractérisé par spectroscopie infrarouge (bande alcool à 3 400 $cm^{-1}$ et bande ester à 1 730 $cm^{-1}$), correspond principalement aux esters de formules:

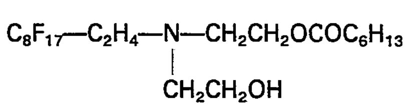

et

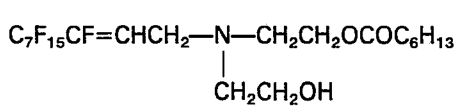

Rendement: 94%.

Exemple 2

On opère comme à l'exemple 1, mais en remplaçant le mélange d'aminodiols fluorés par la même proportion molaire d'une mélange industriel d'amino-dioles fluorés de formules:

$$C_nF_{2n+1}CH_2CH_2N(CH_2CH_2OH)_2$$

et

$$C_{n-1}F_{2n-1}CF{=}CH{-}CH_2N(CH_2CH_2OH)_2$$

où n est égal à 6, 8, 10, 12 et 14 dans des pourcentages pondéraux respectifs de 56,2%, 27,2%, 12,3%, 3,7% et 0,6%. Ce mélange dont la masse moléculaire moyenne est de 510, contient environ 65% molaire d'aminodiols saturés et 35% molaire d'aminodiols insaturés.

On obtient avec un rendement de 96% un mélange constitué principalement par les esters de formules:

$$C_nF_{2n+1}CH_2CH_2{-}N(CH_2CH_2OH){-}CH_2CH_2{-}OCOC_6H_{13}$$

et

$$C_{n-1}F_{2n-1}CF{=}CH{-}CH_2{-}N(CH_2CH_2OH){-}CH_2CH_2{-}OCOC_6H_{13}$$

Exemple 3

On opère comme à l'exemple 1, mais en remplaçant le chlorure d'heptanoyle par 8,6 g de chlorure de lauroyle et le diisopropyléther par 150 g de méthyl tert-butyl éther.

On obtient avec un rendement de 95% un mélange constitué principalement par les esters de formules:

$$C_8F_{17}{-}C_2H_4{-}N(CH_2CH_2OH){-}CH_2CH_2OCOC_{11}H_{23}$$

et

$$C_7F_{15}{-}CF{=}CHCH_2N(CH_2CH_2OH){-}CH_2CH_2OCOC_{11}H_{23}$$

et caractérisé par spectroscopie infra-rouge (bande alcool: 3 400 $cm^{-1}$, bande ester: 1 735 $cm^{-1}$).

Exemple 4

On répète l'exemple 3, mais en remplaçant les aminodiols en $C_8F_{17}$ et $C_7F_{15}$ par une proportion molaire équivalente du mélange industriel d'amino-diols fluorés défini à l'exemple 2.

On obtient avec un rendement de 98% un mélange constitué principalement par les esters de formules:

$$C_nF_{2n+1}{-}C_2H_4{-}N(CH_2CH_2OH){-}CH_2CH_2{-}OCOC_{11}H_{23}$$

et

$$C_{n-1}F_{2n-1}CF{=}CH{-}CH_2{-}N(CH_2CH_2OH){-}CH_2CH_2{-}OCOC_{11}H_{23}$$

Exemple 5

On opère comme à l'exemple 1, mais en remplaçant respectivement le chlorure d'heptanoyle et les aminodiols en $C_8F_{17}$ et $C_7F_{15}$ par des quantités molaires équivalentes de chlorure d'oléyle et du même mélange d'amino-diols fluorés qu'a l'exemple 2. On ne chauffe qu'une heure à 60°C.

On obtient ainsi avec un rendement de 94% un mélange composé principalement des esters de formules:

$$C_nF_{2n+1}{-}C_2H_4{-}N(CH_2CH_2OH){-}CH_2CH_2{-}OCO(CH_2)_7CH{=}CH(CH_2)_7CH_3$$

et

$$C_{n-1}F_{2n-1}CF{=}CH{-}CH_2{-}N(CH_2CH_2OH){-}CH_2CH_2{-}OCO(CH_2)_7CH{=}CH(CH_2)_7CH_3$$

sous forme d'un liquide foncé, caractérisé par spectroscopie infrarouge (bande alcool: 3 420 $cm^{-1}$; bande ester: 1 740 $cm^{-1}$).

Exemple 6

On opère comme à l'exemple 1, mais en remplaçant le chlorure d'heptanoyle par 5,52 g de chlorure de benzoyle et en chauffant pendant 4 heures à 60—70°C.

On obtient avec un rendement de 95% un mélange constitué principalement par les esters de formules:

$$C_8F_{17}-C_2H_4-\underset{\displaystyle CH_2CH_2OH}{\underset{|}{N}}-CH_2CH_2-OCOC_6H_5$$

et

$$C_7H_{15}CF=CH-CH_2-\underset{\displaystyle CH_2CH_2OH}{\underset{|}{N}}-CH_2CH_2-OCOC_6H_5$$

sous forme d'un liquide visqueux orange, caractérisé par spectroscopie infra-rouge (bande alcool: 3 440 $cm^{-1}$; bande ester: 1 720 $cm^{-1}$).

Exemple 7

On répète l'exemple 6 mais en remplaçant les amino-diols en $C_8F_{17}$ et $C_7F_{15}$ par le mélange industriél d'amino-diols fluorés défini à l'exemple 2. Le produit obtenu est un liquide visqueux, légèrement trouble à température ambiante. Rendement 87%.

Exemple 8

A une solution de 22,5 g du mélange d'amino-diols fluorés en $C_8F_{17}$ et $C_7F_{15}$ défini à l'exemple 1 et 8,3 g de triéthylamine dans 120 g de diisopropyl éther, on ajoute goutte à goutte, à témperature ambiante et sous agitation constante, 12,2 g de chlorure d'heptanoyle. La solution est ensuite chauffée à reflux pendant 4 heures. Après refroidissement, le chlorhydrate de triéthylamine est filtré et lavé à l'éther, puis on élimine le solvant par évaporation sous vide.

On obtient ainsi, sous forme d'un liquide jaune-orangé très fluide, un mélange des diesters de formules:

$$C_8F_{17}-C_2H_4-N(CH_2CH_2-OCOC_6H_{13})_2$$

et

$$C_7F_{15}CF=CH-CH_2N(CH_2CH_2-OCOC_6H_{13})_2$$

caractérisé par spectroscopie infra-rouge (absence de bande OH à 3 400 $cm^{-1}$; bande ester présente à 1 730 $cm^{-1}$). Rendement: 88%.

Exemple 9

On opère comme à l'exemple 8, mais en remplaçant les aminodiols en $C_8F_{17}$ et $C_7F_{15}$ par 20,9 g du mélange industriel d'aminodiols fluorés défini à l'exemple 2. Le rendement en diesters de formules:

$$C_nF_{2n+1}-C_2H_4-N(CH_2CH_2-OCOC_6H_{13})_2$$

et

$$C_{n-1}F_{2n-1}CF=CH-CH_2-N(CH_2CH_2-OCOC_6H_{13})_2$$

est de 96%.

Exemple 10

a) Dans un autoclave de 1 litre en Hastelloy C, muni d'un dispositif d'agitation à entraînement magnétique, on introduit 0,2 l d'éthanol, 23,65 g de perfluorooctyl-3 propanenitrile et 1 g de nickel de Raney en suspension dans 20 ml d'éthanol. Après fermeture de l'autoclave, on introduit 19 g d'ammoniac, puis 6 MPa d'hydrogène et on chauffe jusqu'à 90°C. On met alors en route l'agitation et maintient à 90°C jusqu'à cessation de la chute de pression (environ 1,5 heure).

L'autoclave est ensuite refroidi, détendu et purgé à l'azote. Après filtration du catalyseur et évaporation de l'éthanol, on obtient 21 g de perfluorooctyl-3 propylamine sous forme d'une poudre blanche fondant à 70°C.

b) On introduit 71,6 g de cette amine et 14,2 g d'oxyde d'éthylène dans un autoclave de 0,5 litre en Hastelloy C, équipé d'un bol en PTFE et d'un dispositif d'agitation à entraînement magnétique, puis on chauffe sous agitation jusqu'a 75°C. La température s'éleve alors d'elle-même jusqu'à 105°C. On refroidit à 85°C et maintient cette température pendant une heure. Aprés décharge de l'autoclave, on maintient le produit à 120°C sous 133 Pa pendant une heure et obtient ainsi 77 g de N-(perfluorooctyl-3 propyl) diéthanolamine sous forme d'un solide gris qui fond à 58—59°C.

c) On opére comme à l'exemple 1, mais en remplaçant les aminodiols en $C_8F_{17}$ et $C_7F_{15}$ par 22,2 g de N-(perfluorooctyl-3 propyl) diéthanolamine. On récupère 24,7 g d'un liquide jaune-orangé qui se solidifie vers 20°C. En spectroscopie infra-rouge, on observe une bande OH à 3 400 $cm^{-1}$ et une bande ester à 1 720 $cm^{-1}$, correspondant à l'ester de formule:

$$C_8F_{17}-(CH_2)_3-\underset{\displaystyle CH_2CH_2OH}{\underset{|}{N}}-CH_2CH_2-OCOC_6H_{13}$$

Exemple 11

A une solution de 30 g du mélange d'amino-diols en $C_8F_{17}$ et $C_7F_{15}$ défini à l'exemple 1 et 5,5 g de triéthylamine dans 100 g de diisopropyléther, on ajoute goutte à goutte, sous agitation constante, 4,3 g de chlorure d'acétyle, puis on chauffe à 60°C pendant deux heures.

Aprés refroidissement, filtration du chlorhydrate de triéthylamine et évaporation sous vide du solvant, on obtient avec un rendement de 95% un mélange constitué principalement par les esters de formule:

$$C_8F_{17}CH_2CH_2-\underset{\displaystyle CH_2CH_2OH}{\underset{|}{N}}-CH_2CH_2OCOCH_3$$

et

$$C_7F_{15}CF=CHCH_2-\underset{\displaystyle CH_2CH_2OH}{\underset{|}{N}}-CH_2CH_2OCOCH_3$$

Exemple 12

On opère comme à l'exemple 11, mais en remplaçant le chlorure d'acétyle par le chlorure de méthacryloyle.

On obtient avec un rendement de 96% un produit très fluide, constitué principalement par les esters de formules:

$$C_8F_{17}CH_2CH_2\underset{\displaystyle CH_2CH_2OH}{\underset{|}{N}}-CH_2CH_2OCO\underset{\displaystyle CH_3}{\underset{|}{C}}=CH_2$$

et

$$C_7F_{15}-CF=CH-CH_2-\underset{\displaystyle CH_2CH_2OH}{\underset{|}{N}}-CH_2CH_2OCO\underset{\displaystyle CH_3}{\underset{|}{C}}=CH_2$$

En spectroscopie infra-rouge, on observe une bande OH à 3 380 $cm^{-1}$ et une bande ester à 1 710 $cm^{-1}$.

Exemple 13

Dans un erlen de 0,1 litre surmonté d'un réfrigérant, muni d'une agitation par barreau magnétique et chauffé par un bain d'huile, on introduit 57,5 g d'une mélange des amino-alcools fluorés $C_8F_{17}CH_2CH_2-NH-CH_2CH_2OH$ et $C_7F_{15}CF=CH-CH_2-NH-CH_2CH_2OH$ (respectivement 67 et 33% en moles), puis 10 g d'époxy-1,2 hexane.

On chauffe sous agitation pendant 6 heures à 105—110°C, puis on rajoute 4 g du même mélange d'amino-alcools fluorés et chauffe pendant encore 3 heures à 110°C.

On obtient ainsi 69,5 g d'un mélange des composés de formules:

$$C_8F_{17}CH_2CH_2-\underset{\displaystyle CH_2CH_2OH}{\underset{|}{N}}-CH_2CH(OH)C_4H_9$$

et

$$C_7F_{15}-CF=CH-CH_2-\underset{\displaystyle CH_2CH_2OH}{\underset{|}{N}}-CH_2CH(OH)C_4H_9$$

sous forme d'un liquide visquex à 40°C, de couleur orangé.

Exemple 14

Dans le même appareillage qu'à l'exemp'le 13, on introduit 24,8 g du même mélange d'amino-alcools fluorés et 9,2 g d'époxy-1,2 dodécane, puis on chauffe sous agitation pendant 3,75 heures à 125°C.

On obtient ainsi 33 g d'un liquide orangé visqueux à 40°C, constitué par un mélange des amino-diols de formules:

$$C_8F_{17}CH_2CH_2-\underset{\displaystyle CH_2CH_2OH}{\underset{|}{N}}-CH_2CH(OH)C_{10}H_{21}$$

et

$$C_7F_{15}-CF=CH-CH_2-\underset{\displaystyle CH_2CH_2OH}{\underset{|}{N}}-CH_2CH(OH)C_{10}H_{21}$$

Exemple 15

Dans le même appareillage qu'à l'exemple 13, on introduit 26,1 g du même mélange d'amino-alcools fluorés et 14,15 g d'époxy-1,2 octadécane, puis on chauffe sous agitation à 120°C pendant 7,75 heures. On

rajoute ensuite, 3,6 g du mélange d'amino-alcools fluorés et chauffe sous agitation pendant encore 2 heures à 120°C, puis 4 heures à 140°C.

On obtient ainsi 42 g d'un produit solide marron, fondant à 40°C, constitué par une mélange des amino-diols de formules:

$$C_8F_{17}CH_2CH_2{-}N{-}CH_2CH(OH)C_{16}H_{33}$$
$$|$$
$$CH_2CH_2OH$$

et

$$C_7F_{15}CF{=}CH{-}CH_2{-}N{-}CH_2CH(OH)C_{16}H_{33}$$
$$|$$
$$CH_2CH_2OH$$

Exemple 16

Dans un autoclave de 0,5 litre en Hastelloy C, équipé d'un bol en PTFE et d'un dispositif d'agitation à entraînement magnétique, on introduit 21,6 g d'époxy-1,2 butane et 146,8 g d'un mélange d'amino-alcools fluorés $C_nF_{2n+1}{-}C_2H_4{-}NH{-}C_2H_4OH$ (67% molaire) et $C_{n-1}F_{2n-1}{-}CF{=}CH{-}CH_2{-}NH{-}C_2H_4OH$ (33% molaire) dont la répartition pondérale des chaînes linéaires $C_nF_{2n+1}$ est la suivante:

| | | |
|---|---|---|
| $C_6F_{13}$ | : | 55,7% |
| $C_8F_{17}$ | : | 27,2% |
| $C_{10}F_{21}$ | : | 10,15% |
| $C_{12}F_{25}$ | : | 3,9% |
| $\geqslant C_{14}F_{29}$ | : | 2,9% |

On chauffe d'abord à 87—88°C pendant 6 heures, puis on rajoute 3,2 g d'époxy-1,2 butane et chauffe encore pendant 4,5 heures à 107°C.

Après refroidissement, vidange de l'autoclave et étêtage à 80°C sous 133 Pa, on obtient 154 g d'un liquide orangé présentent un léger dépôt à température ambiante, mais entièrement limpide à 30°C. Ce produit est un mélange des amino-diols de formules:

$$C_nF_{2n+1}C_2H_4{-}N{-}CH_2CH(OH)C_2H_5$$
$$|$$
$$C_2H_4OH$$

et

$$C_{n-1}F_{2n-1}{-}CF{=}CH{-}CH_2{-}N{-}CH_2CH(OH)C_2H_5$$
$$|$$
$$C_2H_4OH$$

Exemple 17

Dans un erlen de 1 litre surmonté d'un réfrigérant, muni d'une agitation par harreau magnétique et chauffé par un bain d'huile, on introduit 476 g du même mélange d'amino-alcools fluorés qu'a l'exemple 16 et 184 g d'époxy-1,2 dodécane, puis on chauffe pendant 3 heures à 120—125°C.

On obtient ainsi 651 g d'un mélange des amino-diols de formules:

$$C_nF_{2n+1}{-}C_2H_4{-}N{-}CH_2CH(OH)C_{10}H_{21}$$
$$|$$
$$C_2H_4OH$$

et

$$C_{n-1}F_{2n-1}{-}CF{=}CH{-}CH_2{-}N{-}CH_2CH(OH)C_{10}H_{21}$$
$$|$$
$$C_2H_4OH$$

sous forme d'un liquide visqueux orangé présentant un léger dépôt à température ambiante, entièrement limpide à 40°C.

Exemple 18

Dans le même appareillage qu'à l'exemple 17, on charge 570 g du même mélange d'amino-alcools fluorés qu'à l'exemple 16 et 144,3 g d'oxyde de styrène, puis on chauffe sous agitation jusqu'à 113°C. La températur s'élève alors d'elle même jusqu'à 134°C. On refroidit à 113—115°C et maintient cette température pendant une heure.

On obtient ainsi 702 g d'un liquide jaune orangé très visqueu à température ambiante, mais fluide à

40°C. L'analyse RMN montre que ce produit comprend une proportion 78% molaire d'amino-diols de formules:

$$C_nF_{2n+1}—C_2H_4—N—CH_2CH(OH)—C_6H_5$$
$$|$$
$$C_2H_4OH$$

et

$$C_{n-1}F_{2n-1}CF{=}CH—CH_2—N—CH_2CH(OH)—C_6H_5$$
$$|$$
$$C_2H_4OH$$

et une proportion 22% molaire d'amino-diols de formules:

$$C_nF_{2n+1}—C_2H_4—N—CH(C_6H_5)—CH_2OH$$
$$|$$
$$C_2H_4OH$$

et

$$C_{n-1}F_{2n-1}—CF{=}CH—CH_2—N—CH(C_6H_5)—CH_2OH$$
$$|$$
$$C_2H_4OH$$

Exemple 19

a) Dans une autoclave de 1 litre en acier inoxydable, on introduit 6 g d'un mélange constitué de 4,5 g d'éthanolamine et 1,5 g de chlorure cuivreux, puis on fait le vide dans l'autoclave, le refroidit à l'azote liquide et y introduit 246 g d'iodure de perfluoréthyle et 64 g de fluorure de vinylidène. On chauffe ensuite sous agitation pendant 21 heures à 145°C, puis on introduit à nouveau 64 g de fluorure de vinylidène et chauffe pendant encore 21 heures à 145°C.

Après refroidissement et purge de l'autoclave, on recueille 146 g d'un produit dont l'analyse CPV des principaux composants es la suivante:

| | | |
|---|---|---|
| $C_2F_5I$ non transforme | : | 29,3% |
| $C_2F_5(CH_2CF_2)_nI$ où n = 1 | : | 23,5% |
| n = 2 | : | 19,9% |
| n = 3 | : | 10,2% |
| n = 4 | : | 4,12% |
| n = 5 | : | 1,3% |
| n = 6: | | 0,4% |
| n = 7 | : | 0,1% |

On distille ce produit sous vide et recueille la fraction bouillant à 59°C sous 4 666 Pa. On obtient ainsi 28,6 g du composé $C_2F_5—(CH_2CF_2)_2I$.

b) Dans le même autoclave que ci-dessus, on charge 4 g d'un mélange constitué par 3 g d'éthanolamine et 1 g de chlorure cuivreux, puis 374 g de $C_2F_5(CH_2CF_2)_2I$. On injecte alors de l'éthylène pendant 7 heures de façon à maintenir une pression de 2,6 MPa à 145°C.

Après détente et purge de l'autoclave, on distille le produit et recueille la fraction bouillant à 70—75°C sous 133 Pa. Elle pèse 276 g et est constituée par le composé $C_2F_5—(CH_2CF_2)_2—CH_2CH_2I$, solide blanc fondant à 54°C.

c) On charge 100 g de ce composé et 100 g d'alcool tert-amylique dans un réacteur de 0,25 litre. On chauffe, à 100°C sous agitation, puis on introduit, en maintenant à cette température, 61 g d'éthanolamine en 30 minutes. On porte ensuite au reflux et maintient celui-ci pendant 7 heures.

Après refroidissement, on laisse décanter et recueille la phase supérieur qui est lavée par décantation à température ambiante d'abord avec 0,1 litre de soude à 10%, puis trois fois avec 0,1 litre d'eau et ensuite étêtée à 31°C sous 6 000 Pa. Le résidu pèse, 60,8 g et est constitué par l'amino-alcool $C_2F_5(CH_2CF_2)_2C_2H_4NHC_2H_4OH$.

d) Dans le même appareillage qu'a l'exemple 13, on introduit 64 g de cet amino-alcool et chauffe sous agitation jusqu'à 65°C. A cette température et toujours sous agitation, on injecte par barbotage et à pression atmosphérique un mélange d'oxyde d'éthylène (4,4 1/h) et d'azote (0,5 l/h) pendant 4,5 heures. On obtient ainsi 72 g de l'amino-diol $C_2F_5(CH_2CF_2)_2—C_2H_4—N(C_2H_4OH)$ brut qui se présente sous forme d'une pâte rouge.

Exemple 20

A température ambiante et sous agitation constante, on ajoute goutte à goutte 4,7 g de chlorure d'heptanoyle à une solution de 12 g de l'amino-diol de l'exemple précédent et 3,2 g de triéthylamine dans 100 ml d'acétone. Après addition complète du chlorure d'heptanoyle, on chauffe pendant deux heures au reflux, puis on refroidit, filtre le chlorydrate de triéthylamine et évapore le solvant par distillation sous vide. Le résidu est ensuite redissout dans l'éther éthylique, puis on filtre la solution pour éliminer les dernières traces de chlorydrate de triéthylamine. Après évaporation de l'éther, on obtient principalement l'ester de formule:

$$C_2F_5-(CH_2CF_2)_2-CH_2CH_2-\underset{\displaystyle CH_2CH_2OH}{\underset{|}{N}}-CH_2CH_2-OCOC_6H_{13}$$

caractérisé par spectroscopie infrarouge (bande OH à 3 360 $cm^{-1}$, bande ester à 1 735 $cm^{-1}$). Rendement: 98%.

Exemple 21

On opère comme à l'exemple 20, mais en remplaçant le chlorure d'heptanoyle par 4,45 g de chlorure de benzoyle. On obtient principalement l'ester de formule:

$$C_2F_5-(CH_2CF_2)_2-CH_2CH_2-\underset{\displaystyle CH_2CH_2OH}{\underset{|}{N}}-CH_2CH_2-OCOC_6H_5$$

caractérisé par spectroscopie infrarouge (bande à 3 330 $cm^{-1}$; bande ester à 1 1710 $cm^{-1}$).

Exemple 22

Dans la même appareillage qu'à l'exemple 13, on introduit 48,2 g de perfluorooctyl-3 propylamine et 18,5 g d'époxy-1,2 dodécane et on chauffe sous agitation à 80—90°C pendant 3 heures. On rajoute alors 18 g d'époxy-1,2 dodécane et chauffe à 100°C pendant 6 heures, puis on rajoute 3,8 g de perfluorooctyl-3 propylamine et poursuit le chauffage pendant 5 heures à 110°C.

On obtient ainsi 87 g de l'aminodiol

$$C_8F_{17}(CH_2)_3N(CH_2\overset{\displaystyle OH}{\overset{|}{C}}H-C_{10}H_{21})_2$$

sous forme d'un solide beige clair fondant à 40°C.

Tests Anti-usure

Le pouvoir anti-usure de compositions lubrifiantes contenant comme huile de base l'huile minérale 200 Neutral Solvent et comme additif un composé à chaîne fluorée selon l'invention a été déterminé à l'aide de la machine 4 billes EP de SHELL dont la description figure dans "Annual Book of ASTM Standards", Part 24 (1979), pages 680 à 688.

Le test consiste à faire tourner une bille de 12 mm de diamètre avec une vitesse de rotation de 1 500 tr/min sur trois autres billes maintenues immobiles et couvertes de lubrifiant à étudier. Une charge de 40 ou 70 daN est appliquée par un système de levier qui pousse les trois billes fixes vers la bille supérieure placée dans un mandrin.

L'efficacité anti-usure d'un lubrifiant est déterminée par la valeur moyenne des diamètres des empreintes d'usure sur les trois billes fixes, après une heures de fonctionnement.

Le tableau I suivant rassemble les résultats obtenus avec différents additifs fluorés selon l'invention, identifiés sous la forme Fx où x correspond au numéro de l'exemple décrivant la préparation de l'additif fluoré. Dans la seconde colonne, est indiquée la proportion pondérale d'additif fluoré incorporé dans l'huile de base.

TABLEAU I

| Additif fluoré | Proportion % poids | Diamètre d'empreinte en mm pour une charge appliquée de 40 daN | 70 daN |
|---|---|---|---|
| Néant (Témoin) | | 1,44 | 2,37 |
| F1 | 0,1 | 0,60 | 0,56 |
| F2 | " | 0,67 | 1,1 |
| F3 | " | 0,42 | 0,50 |
| F4 | " | 0,65 | 0,78 |
| F5 | " | 0,68 | 1.08 |
| F6 | " | 0,39 | 0,61 |
| F7 | " | 0,66 | 0,77 |
| F8 | " | 0,77 | — |
| F9 | " | 0,80 | — |
| F10 | " | 0,72 | 1,1 |
| F11 | " | 0,57 | 0,79 |
| F12 | " | 0,37 | 0,77 |
| F13 | 0,1 | 0,69 | 0,94 |
| F14 | " | 0,67 | 0,76 |
| F15 | " | 0,65 | 0,77 |
| F17 | " | 0,70 | 1,10 |
| F18 | " | 0,68 | 0,90 |
| F19 | " | 0.84 | 1,05 |
| F20 | " | 0,59 | 0,78 |
| F21 | " | 0,63 | 0,78 |

La même méthode a été appliquée pour déterminer l'efficacité anti-usure de compositions lubrifiantes obtenues en ajoutant à l'huile minérale 200 N les principaux additifs classiques entrant dans la composition d'une huile pour moteur à essence de la catégorie SAE 15W40, hormis le dithiophosphate de zinc qui est remplacé par un composé à chaîne fluorée selon l'invention. Les principaux additifs classiques d'une huile de type SAE 15W40 sont un détergent (sulfonate surbasé), un dispersant (succinimide) et un anti-oxydant (amine aromatique). Les résultats de ces tests sont rassemblés dans le tableau II suivant:

TABLEAU II

| Additif fluoré | Proportion % poids | Diamètre d'empreinte en mm pour une charge appliquée de: 40 daN | 60 daN | 70 daN |
|---|---|---|---|---|
| Néant (Témoin) | | 0,60 | 1,80 | 2,10 |
| F1 | 0,1 | 0,37 | — | 0,82 |
| " | 0,3 | 0,37 | — | 0,86 |
| F2 | 0,2 | 0,37 | — | 0,70 |
| F3 | " | 0,37 | — | 0,70 |
| F4 | " | 0,38 | — | 0,68 |
| F5 | " | 0,38 | — | 0,63 |
| F6 | " | 0,45 | — | 0,86 |
| F7 | " | 0,36 | — | 0,68 |
| F8 | " | 0,41 | — | — |
| F9 | " | 0,44 | — | — |
| F10 | " | 0,40 | — | 0,75 |
| F11 | " | 0,36 | — | 0,66 |
| F12 | " | 0,36 | — | 0,69 |
| F13 | 0,23 | 0,56 | — | 0,89 |
| F14 | 0,3 | — | 0,59 | 0,75 |
| F15 | 0,15 | — | 0,57 | — |
| F15 | 0,2 | — | — | 0,82 |
| " | 0,3 | — | 0,59 | 0,75 |
| F17 | 0,2 | — | 0,45 | 1,84 |
| " | 0,27 | — | 0,45 | 1,28 |
| F18 | 0,2 | 0,37 | — | 0,75 |
| F21 | " | 0,54 | — | 0,77 |
| F22 | " | 0,46 | — | — |

La même méthode a également été appliquée pour examiner les propriétés anti-usure de compositions lubrifiantes associant des dithiophosphates de zinc et les dérivés fluorés selon l'invention, de façon à ce que les teneurs en zinc, phosphore et soufre soient inférieures à celles des huiles classiques. Dans le tableau III suivant rassemblant les résultats obtenus, l'additif A est un dialkyldithiophosphate de zinc anti-usure et l'additif B un alkylaryldithiophosphate de zinc anti-oxydant.

TABLEAU III

| Composition lubrifiante | Teneur en zinc (ppm) | Diamétre d'empreinte pour une charge de: 40 daN | 70 daN |
|---|---|---|---|
| Témoins: Huile 200N+1% de A | 1060 | 0,41 | 0,90 |
| Huile 200N+0,5% de A | 530 | 0,42 | 0,90 |
| Huile 200N+0,5% de A+0,1% de $F_3$ | " | 0,40 | 0,60 |
| Huile 200N+0,5% de A+0,1% de $F_4$ | " | 0,39 | 0,64 |
| Huile 200N+0,5% de A+0,1% de $F_{18}$ | " | 0,42 | 0,60 |
| Huile 200N+0,5% de A+0,2% de $F_{18}$ | " | 0,40 | 0,50 |
| Témoins = Huile 200N+1% de B | 330 | 0,77 | 1,97 |
| Huile 200N+1% de B+O, 1% de $F_3$ | " | 0,37 | 0,54 |
| Huile 200N+1% de B+O, 1% de $F_4$ | " | 0,35 | 0,55 |

Ces résultats montrent que l'association des dérivés fluorés selon l'invention avec les dithiophosphates de zinc permet d'obtenir des compositions à faible teneur en zinc possédant des propriétés anti-usure remarquables.

Les propriétés anti-usure des composés fluorés selon l'invention ou également été testées à l'aide de la machine FALEX décrite dans "Annual Book of ASTM Standards" Part 24 (1978), pages 594 à 601, en utilisant une huile du type SAE 15 W 40 dont le dithiophosphate de zinc a été remplacé par une composé fluoré selon l'invention. On enregistre soit le rupture de l'outil, soit sa perte de poids (usure) après l'avoir soumis pendant 3 heures à une charge de 250 kg. Le tableau IV suivant rassemble les résultats obtenus.

TABLEAU IV

| Additif fluoré | Proportion (% poids) | Perte de poids en mg |
|---|---|---|
| Néant (témoin) | | Rupture |
| F1 | 0,22 | 106 |
| F13 | 0,23 | 100 |
| F15 | 0,31 | 66 |
| F18 | 0,20 | 30 |

Tests Sur Banc Moteur

Une huile pour moteurs à essence de la catégorie SAE 15W40 et contenant un composé fluoré selon l'invention a été testée sur un banc moteur, comparativement à une huile commerciale de même catégorie contenant un dialkyl dithiophosphate de zinc (additif anti-usure habituellement utilisé dans les huiles moteurs).

L'huile témoin ($H_1$) est une huile commerciale qui contient, en plus du dialkyl dithiophosphate de zinc, les autres additifs classiques entrant dans la composition de ce type de lubrifiant (détergent, dispersant, antioxydant, améliorant de viscosité, inhibiteur de figeage).

L' huile ($H_2$) selon l'invention ne différe de l'huile témoin ($H_1$) que par le remplacement du dialkyl dithiophosphate de zinc par 0,3% de composé $F_1$ dans l'huile ($H_2$).

Les essais ont été effectués dans les conditions suivantes:

Moteur RENAULT 20TS, type 829/7, ayant une cylindrée de 2 000 $cm^3$, une puissance nominale de 81 kW et un régime moteur nominal de 5 600 tr/min.

Rodage: 10 heures.

Durée de l'essai (après rodage): 100 heures sans vidange.

Puissance: pleine charge.

Contrôle périodique de la témperature de l'huile et de l'eau (entrée et sortie).

Après l'essai, les pièces moteurs ont été analysée et cotées selon la norme européenne MO2A78. Les résultats sont regroupés dans le tableau suivant:

TABLEAU V

| | Notation maximale | Huile $H_1$ | Huile $H_2$ |
|---|---|---|---|
| Segments: liberté | 20 | 20 | 20 |
| Pistons: | | | |
| jupe | 10 | 8,4 | 8,9 |
| cordons (1+2) | 10 | 2,5 | 5,4 |
| gorges carbone (1+2+3) | 30 | 24,7 | 25,3 |
| gorges vernis (1+2+3) | 20 | 6,2 | 11,1 |
| fonds | 10 | 2,1 | 5,8 |
| TOTAL | 100 | 63,9 | 76,5 |

Tests De Stabilite Thermique

Afin d'apprécier leur comportement dans des conditions proches de celles existant dans un moteur, les composés fluorés selon l'invention ont été soumis à une analyse thermique gravimétrique sous air. Ce test consiste à soumettre en échantillon de produit à une élévation de température (2°C/min) sous un débit d'air de 10 1/h et à enregistrer les pourcentages de perte de poids à 200, 250 et 300°C.

Le tableau suivant rassemble les résultats obtenus. A titre comparatif, on a indiqué au début du tableau le comportement des composés fluorés suivants préconisés dans la technique antérieure (brevet FR 2 520 377).

*P1*: $C_8—F_{17}—C_2H_4—NH—C_2H_4OH$

*P2*: $C_8—F_{17}—C_2H_4—N(C_2H_4OH)_2$

*P3*: $C_nF_{2n+1}—C_2H_4—N(C_2H_4OH)_2$
(n défini comme à l'exemple 2 ci-dessus).

TABLEAU VI

| Composé Fluoré | Perte de poids (%) à 200°C | 250°C | 300°C |
|---|---|---|---|
| P1 | 80 | 94,6 | 97 |
| P2 | 27,5 | 92,6 | 96,4 |
| P3 | 43,8 | 96,5 | 99,9 |
| F1 | 7,5 | 31,5 | 80 |
| F2 | 7,5 | 30 | 80,6 |
| F3 | 5 | 16,6 | 48 |
| F4 | 4,4 | 15,6 | 43 |
| F5 | 4,8 | 13,8 | 28,7 |
| F6 | 2,4 | 18,1 | 61,2 |
| F7 | 6,8 | 28,7 | 80,3 |
| F8 | 6,2 | 37,5 | 97,5 |
| F9 | 8,1 | 37,5 | 87 |
| F12 | 14,8 | 57 | 87 |
| F13 | 5 | 17,5 | 58 |
| F14 | 5 | 17,5 | 58 |
| F15 | 3 | 16 | 41 |
| F17 | 4 | 20 | 62,5 |
| F18 | 5 | 25 | 64,4 |
| F21 | 9,4 | 43,8 | 86,3 |
| F22 | 2,5 | 6,5 | 25 |

**Revendications**

1. Lubrifiants, caractérisés en ce qu'ils contiennent au moins un composé polyfluoré de formule générale:

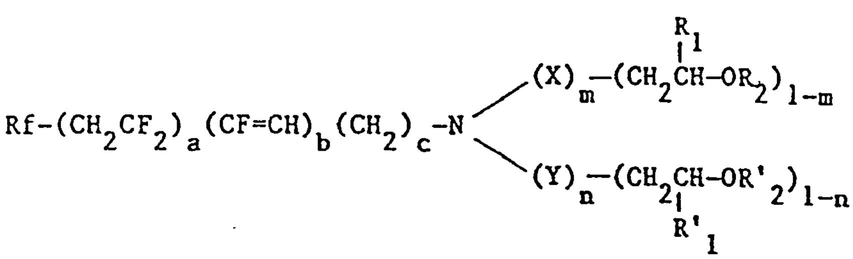

(I)

dans laquelle:

Rf désigne un radical perfluoré,

a est un nombre entier allant de 0 à 10,

b est égal à 0 ou 1, mais ne peut être égal à 1 que si, simultanément, a est égal à 0 et c est égal à 1,

c est un nombre entier allant de 1 à 4 quand a est égal à zéro, mais est égal à 2 quand a est différent de 0,

m et n sont chacun égaux à 0 ou 1,

X représente un radical aryle éventuellement substitué,

Y représente le groupement hydroxy-2 phényl-1 éthyle,

$R_1$ et $R'_1$, identiques ou différentes, représentent chacun un atome d'hydrogène, un radical alkyle contenant de 1 à 20 atomes de carbone, un radical cycloalkyle contenant 5 ou 6 atomes de carbone, ou un radical aryle éventuellement substitué,

$R_2$ et $R'_2$, identiques ou différentes, repésentent chacun un atome d'hydrogène ou le reste acyle d'un acide carboxylique aliphatique, cycloaliphatique ou aromatique, l'un au moins des symboles $R_1$ et $R_2$ étant autre que l'hydrogène ou un radical méthyle si la somme a+m+n est nulle, et l'un au moins des symboles $R'_1$ et $R'_2$ est autre que l'hydrogéne si m est égale à 1.

2. Lubrifiants selon la revendication 1, dans lesquels Rf est un radical perfluoroalkyle linéaire ou ramifié contenant de 2 à 20 atomes de carbone.

3. Lubrifiants selon la revendication 1 ou 2 contenant un mélange de composés polyfluorés dont les radicaux Rf sont différents.

4. Lubrifiants selon l'une des revendications 1 à 3, dans lesquels a est nul et c égal à 1 ou 2.

5. Lubrifiants selon l'une des revendications 1 à 4, dans lesquels m est égal à 1 et X est un radical phényle non substitué ou substitué par un groupe alkyle ou alcoxy de 1 à 4 atomes de carbone.

6. Lubrifiants selon l'une des revendications 1 à 5, dans lesquels le ou les composés polyfluorés sont choisis parmi ceux de formules:

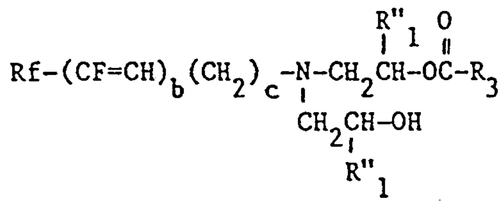

(I-b)

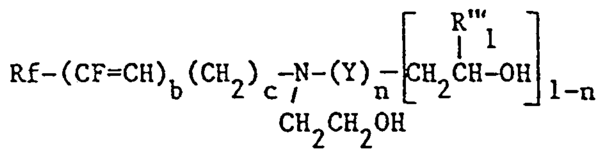

(I-c)

dans lesquelles la somme b+c est égale à 2, $R''_1$ est un atome d'hydrogène ou un radical méthyle, $R'''_1$ représente un radical alkyle contenant un nombre pair de 2 à 16 atomes de carbone et $R_3$ représente un radical aliphatique, cycloaliphatique ou aromatique.

7. Lubrifiants selon l'une des revendications 1 à 6, dans lesquels la teneur en composé(s) polyfluoré(s) est d'au moins 0,1 1% en poids et, de préférence, comprise entre 0,05 et 0,5%.

8. Lubrifiants selon l'une des revendications 1 à 7, dans lesquels le ou les composés polyfluorés sont associés aux additifs classiques.

9. Les composés polyfluorés de formule:

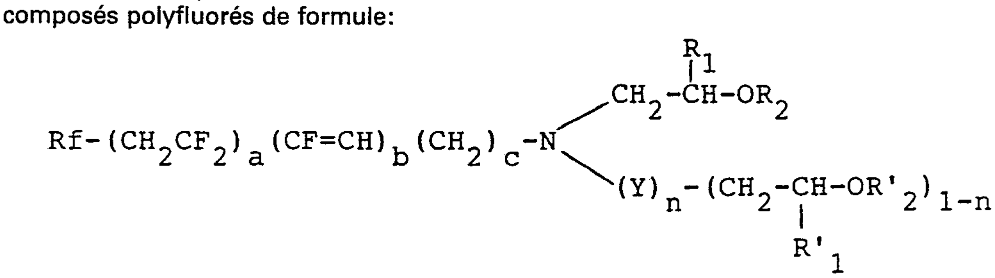

dans laquelle les symboles Rf, a, b, c, n, $R_1$, $R_2$, $R'_1$, $R'_2$ et Y sont tels que définis dans la revendication 1.

10. Composés selon la revendication 9, dans lesquels Rf est un radical perfluoroalkyle linéaire ou ramifié contenant de 2 à 20 atomes de carbone.

11. Composés selon la revendication 9 ou 10, caractérisé en ce qu'ils répondant à la formule:

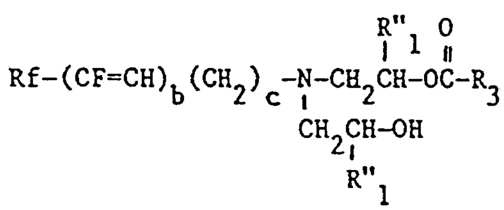

(I-b)

dans laquelle la somme b+c est égale à 2, $R''_1$ est un atome d'hydrogène ou un radical méthyle et $R_3$ est un radical aliphatique, cycloaliphatique ou aromatique.

12. Composés selon la revendication 9 ou 10, caractérisés en ce qu'ils répondent à la formule:

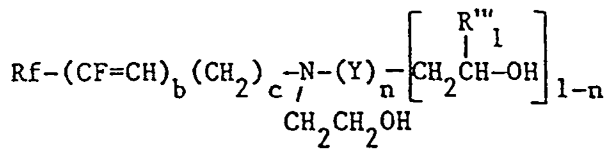

(I-c)

dans laquelle la somme b+c est égale à 2 et $R'''_1$ représente un radical alkyle contenant un nombre pair de 2 à 16 atomes de carbone.

**Patentansprüche**

1. Schiermittel, dadurch gekennzeichnet, daß sie wenigstens eine polyfluorierte Verbindung der allgemeinen Formel:

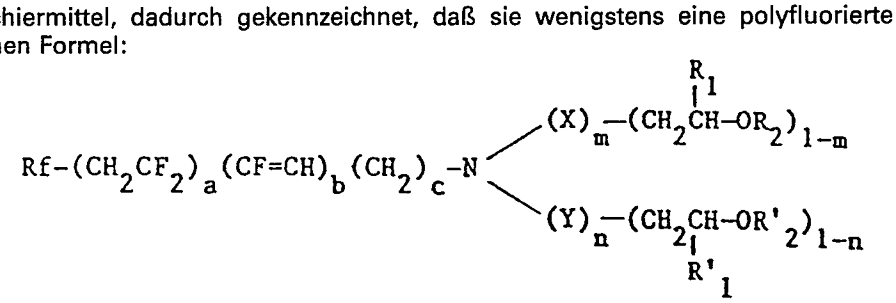

(I)

enthalten,
in der

Rf einen perfluorierten Rest darstellt,
a eine ganze Zahl von 0 bis 10 ist,
b gleich 0 oder 1 ist, jedoch nur gleich 1 sein kann, wenn gleichzeitig a gleich 0 und c gleich 1 ist,
c eine ganze Zahl von 1 bis 4 ist, wenn a gleich 0 ist, jedoch gleich 2 ist, wenn a von 0 verschieden ist,
m und n jeweils gleich 0 oder 1 sind,
X einen gegebenenfalls substituierten Arylrest darstellt,
Y den Rest 2-Hydroxy-1-phenylethyl darstellt,
$R_1$ und $R'_1$ gleich oder verschieden sind und jeweils ein Wasserstoffatom, einen Alkylrest mit 1 bis 20 Kohlenstoffatomen, einen Cycloalkylrest mit 5 oder 6 Kohlenstoffatomen oder einen gegbenenfalls substituierten Arylrest darstellen,
$R_2$ und $R'_2$ identisch oder verschieden sind und jeweils ein Wasserstoffatom oder den Acylrest einer aliphatischen, cycloaliphatischen oder aromatischen Carbonsäure darstellt, wobei wenigstens eines der Symbole $R_1$ und $R_2$ von Wasserstoff oder dem Methylrest verschieden ist, wenn die Summe a+m+n gleich Null ist, und wenigstens eines der Symbole $R'_1$ und $R'_2$ von Wasserstoff verschieden ist, wenn m gleich 1 ist.

2. Schmiermittel gemäß Anspruch 1, bei denen Rf ein linearer oder verzweigter Perfluoralkylrest ist, der 2 bis 20 Kohlenstoffatome aufweist.

3. Schmiermittel nach Anspruch 1 oder 2, die ein Gemisch polyfluorierter Verbindungen enthalten, in denen die Reste Rf verschieden sind.

4. Schmiermittel nach einem der Ansprüche 1 bis 3, in denen a Null ist und c gleich 1 oder 2 ist.

5. Schmiermittel nach einem der Ansprüche 1 bis 4, in denen m gleich 1 ist und X ein nicht substituierter oder mit einer Alkyl- oder Alkoxygruppe mit 1 bis 4 Kohlenstoffatomen substituierter Phenylrest ist.

6. Schmiermittel gemäß einem der Anspruche 1 bis 5, bei denen die polyfluorierte(n) Verbindungen(en) ausgewählt wird (werden) aus denjenigen der Formeln:

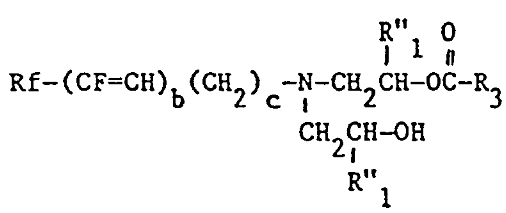

(I-b)

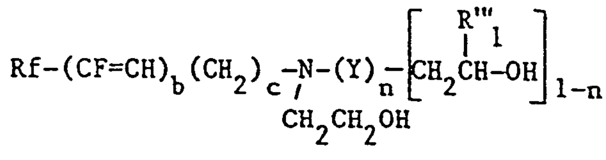

(I-c)

in denen die Summe b+c gleich 2 ist, $R''_1$ ein Wasserstoffatom oder ein Methylrest ist, $R'''_1$ einen Alkylrest darstellt, der eine gerade Zahl an Kohlenstoffatomen zwischen 2 und 16 enthält und $R_3$ einen aliphatischen Rest, cycloaliphatischen Rest oder aromatischen Rest darstellt.

7. Schmiermittel gemäß einem der Ansprüche 1 bis 6, in denen der Gehalt an polyfluorierten Verbindungen wenigstens 0,01 Gew.% und vorzugsweise zwischen 0,05 und 0,5% beträgt.

8. Schmiermittel gemäß einem der Ansprüche 1 bis 7, in denen die polyfluorierte(n) Verbindung(en) mit klassischen Additiven kombiniert ist (sind).

9. Polyfluorierte Verbindungen der Formel:

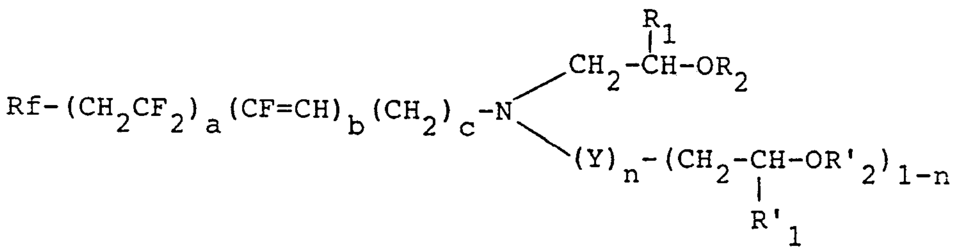

in der die Reste Rf, a, b, c, n, $R_1$, $R_2$, $R'_1$, $R'_2$ und Y der Definition von Anspruch 1 entsprechen.

10. Verbindungen gemäß Anspruch 9, in denen Rf ein linearer oder verzweigter Perfluoralkylrest mit 2 bis 20 Kohlenstoffatomen ist.

11. Verbindungen gemäß Anspruch 9 oder 10, dadurch gekennzeichnet, daß sie der Formel:

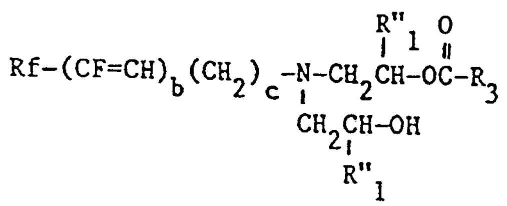
(I-b)

entsprechenden, in der die Summe b+c gleich 2 ist, $R''_1$ ein Wasserstoffatom oder ein Methylrest ist und $R_3$ ein aliphatischer, cycloaliphatischer oder aromatischer Rest ist.

12. Verbindungen gemäß Anspruch 9 oder 10, dadurch gekennzeichnet, daß sie der Formel:

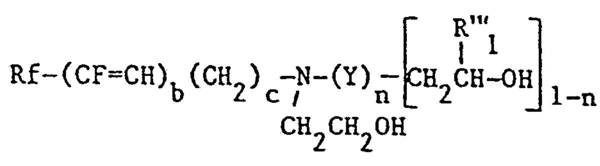
(I-c)

entsprechen, in der die Summe b+c gleich 2 ist und $R'''_1$ einen Alkylrest mit einer geraden Anzahl von Kohlenstoffatomen zwischen 2 und 16 darstellt.

## Claims

1. Lubricants, characterized in that they contain at least one polyfluorinated compound of the general formula:

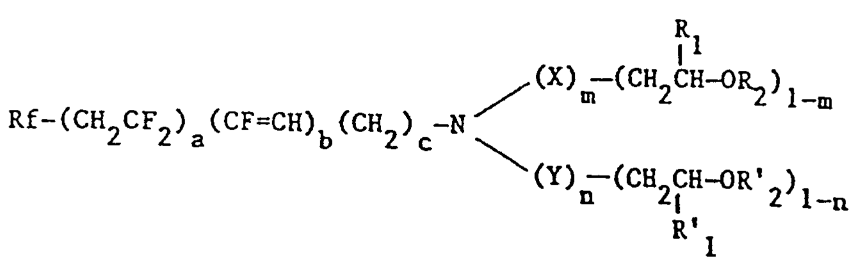
(I)

in which:

Rf denotes a polyfluorinated radical,
a is an integer of from 0 to 10,
b is equal to 0 or 1, but cannot be equal to 1 if simultaneously a is equal to 0 and c is equal to 1,
c is an integer from 1 to 4 if a is equal to zero, but is equal to 2 if a is other than 0,
m and n are each equal to 0 or 1,

X represents an optionally substituted aryl radical,

Y represents the 2-hydroxy-1-phenylethyl grouping,

$R_1$ and $R'_1$ which can be identical or different each represent a hydrogen atom, an alkyl radical containing 1 to 20 carbon atoms, a cycloalkyl radical containing 5 or 6 carbon atoms or an optionally substituted aryl radical,

$R_2$ and $R'_2$ which can be identical or different each represent a hydrogen atom or the acyl radical of aliphatic, cycloaliphatic or aromatic carboxylic acid, at least one of the symbols $R_1$ and $R_2$ being other than hydrogen or a methyl radical if the total a+m+n is zero, and at least one of the symbols $R'_1$ and $R'_2$ is other than hydrogen if m is equal to 1.

2. Lubricants according to Claim 1, in which Rf is a linear or branched perfluoroalkyl radical containing 2 to 20 carbon atoms.

3. Lubricants according to Claim 1 or 2, containing a mixture of polyfluorinated compounds, the Rf radicals of which are different.

4. Lubricants according to one of Claims 1 to 3, in which a is zero and c is equal to 1 or 2.

5. Lubricants according to one of Claims 1 to 4, in which m is equal to 1 and X is a phenyl radical which is unsubstituted or substituted by an alkyl or alkoxy group having 1 to 4 carbon atoms.

6. Lubricants according to one of Claims 1 to 5, in which the polyfluorinated compound(s) is or are selected from those of formulae:

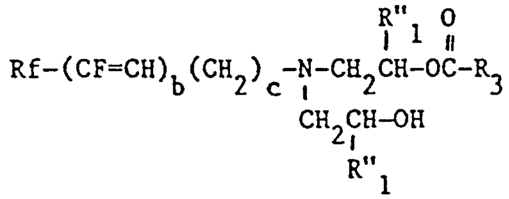

(I-b)

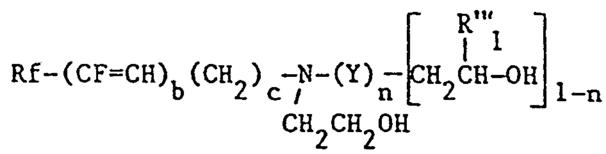

(I-c)

in which the sum of b+c is equal to 2, $R''_1$ is a hydrogen atom or a methyl radical, $R'''_1$ represents an alkyl radical containing an even number of carbon atoms from 2 to 16 and $R_3$ represents an aliphatic, cycloaliphatic or aromatic radical.

7. Lubricants according to one of Claims 1 to 6, in which the content of polyfluorinated compound(s) is at least 0.01% by weight and is preferably between 0.05 and 0.5%.

8. Lubricants according to one of Claims 1 to 7, in which the polyfluorinated compound(s) is or are associated with conventional additives.

9. Polyfluorinated compounds of the formula:

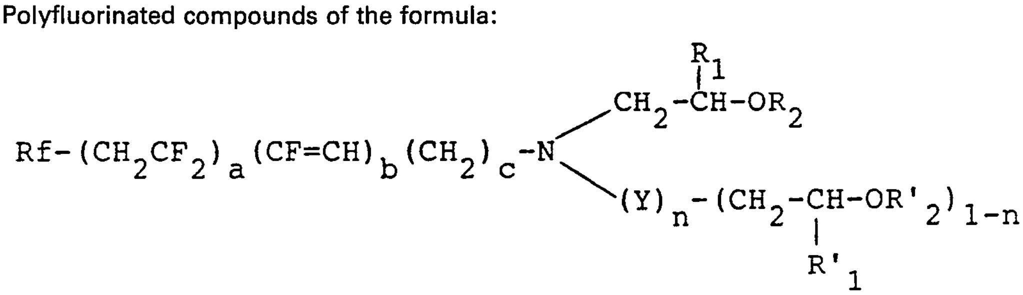

in which the symbols Rf, a, b, c, n, $R_1$, $R_2$, $R'_1$, $R'_2$ and Y are as defined in Claim 1.

10. Compounds according to Claim 9, in which Rf is a linear or branched perfluoroalkyl radical containing 2 to 20 carbon atoms.

11. Compounds according to Claim 9 or 10, characterized in that they correspond to the formula:

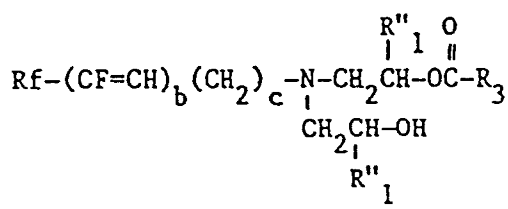

(I-b)

in which the sum of b+c is equal to 2, $R''_1$ is a hydrogen atom or a methyl radical and $R_3$ is an aliphatic, cycloaliphatic or aromatic radical.

12. Compounds according to Claim 9 or 10, characterized in that they correspond to the formula:

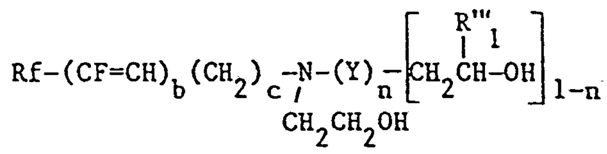

(I-c)

in which the sum of b+c is equal to 2 and $R'''_1$ represents an alkyl radical containing an even number of carbon atoms from 2 to 16.